# EUROPEAN PATENT SPECIFICATION

(11) **EP 2 250 714 B1**
(45) Date of publication and mention of the grant of the patent: **14.01.2015**
(21) Application number: 08707775.6
(22) Date of filing: 19.02.2008
(51) Int. Cl.: H01S 3/23, G02F 1/03, B23K 26/06

(54) **GENERATION OF BURST OF LASER PULSES**
BURST-ERZEUGUNG VON LASERIMPULSEN
GÉNÉRATION DE SALVES D IMPULSIONS LASER

(43) Date of publication of application: 17.11.2010
(73) Proprietor: Bergmann Messgeräte Entwicklung KG, 82418 Murnau (DE); Hosseini, Abbas S., Richmond Hill, Ontario L4E 5B7 (CA); Herman, Peter, R., Mississauga, ON L5H 2X2 (CA)
(72) Inventor: HOSSEINI, Abbas, S., Richmond Hill, Ontario L4E 5B7 (CA); HERMAN, Peter, R., Mississauga, Ontario L5H X2X (CA); BERGMANN, Thorald, Horst, 82418 Murnau (DE)
(74) Representative: Patentanwälte Lambsdorff & Lange
(86) International application number: PCT/EP2008/001288
(87) International publication number: WO 2009/103313

(56) References cited:
- WO-A-03/047807
- US-A1- 2006 018 349
- US-A1- 2006 131 284
- US-A1- 2007 047 601

## Description

### BACKGROUND OF THE INVENTION

The present invention is related to a method for generating bursts of laser pulses according to the independent claim 1 and to an apparatus for generating bursts of laser pulses according to the independent claim 3. Further embodiments are defined in the dependent claims.

The present invention is in general related to laser technology and optical control systems for manipulating laser properties, particularly of interest to the laser material processing industry. The present invention has therefore a broad relevance to steering the laser interaction physics and chemistry of various types of materials, including gas and liquid phase media, and may find potential application in fields like laser material processing but also in fields beyond laser material processing like multi-photon spectroscopy, laser spectroscopy, surgery or other medical procedures, tissue and cell probing, extreme ultraviolet lithography sources, high harmonics generation, and x-ray lasers.

Documents US 2007/0047601 A1 and US 2006/0018349 A1 describe laser pulse multipliers and pulse train generators.

Nearly all efforts in laser processing of materials are focused on the delivery of controlled laser fluence or energy onto or inside the sample target. Common optimization parameters are the pulse duration, wavelength, energy, polarization, and coherence of the laser as well as the beam profile and focusing geometry in the optical delivery system, to name only a few.

### SUMMARY OF THE INVENTION

According to a first aspect there is provided a method for generating bursts of laser pulses, comprising generating first repetition rate laser pulses, and generating first repetition rate laser bursts from the repetition laser pulses, the laser bursts each containing a sequence of second repetition rate laser pulses, wherein the second repetition rate is higher than the first repetition rate.

According to a second aspect there is provided a method for generating bursts of laser pulses, comprising generating first repetition rate laser bursts, the laser bursts each containing a sequence of second repetition rate laser pulses, wherein the second repetition rate is higher than the first repetition rate, and individually controlling one or more of the pulse shape, pulse peak power and pulse duration of the second repetition rate laser pulses within the laser bursts.

According to a third aspect there is provided an apparatus for generating bursts of laser pulses, comprising a pulsed laser system generating first repetition rate laser pulses, a burst generator receiving the first repetition rate laser pulses and generating first repetition rate laser bursts, the laser bursts each containing a sequence of second repetition rate laser pulses, wherein the second repetition rate is higher than the first repetition rate.

According to a fourth aspect there is provided an apparatus for generating bursts of laser pulses, comprising a pulsed laser system generating laser pulses, and a burst generator comprising an optical resonator system, the resonator system comprising a Pockels cell.

According to a fifth aspect there is provided an apparatus for generating bursts of laser pulses, comprising a pulsed laser system generating laser pulses at a repetition rate greater than 1 MHz, and a burst generator comprising a Pockels cell, the Pockels cell being arranged to generate bursts of laser pulses and to individually control one or more of the pulse shape, pulse peak power and pulse duration of the laser pulses within the laser bursts.

According to an example there is provided a Pockels cell driving circuit, comprising a digital signal generator for generating digital signals on a number of output terminals, an analog arbitrary wave form generator for generating output signals on a number of output terminals, and a time shifting unit having a number of first input terminals coupled to the output terminals of the digital signal generator, a number of second input terminals coupled to the output terminals of the analog arbitrary wave form generator, and a number of output terminals.

According to one example there is provided a new approach for generating high repetition rate bursts of ultrashort duration laser pulses and includes in a further embodiment thereof a feedback loop with a self-learning algorithm to optimize the burst train profile of the pulses.

According to a further example there is provided a method of time-delayed triggering of a Pockels cell voltage with respect to the arrival of a short duration laser pulse into the Pockels cell. The applied voltage may have a well defined voltage versus time function, and this voltage being applied to the Pockels cell will produce a well defined polarization shift. Using a polarizing element, it is feasible to control laser energy directly or to leak out of an optical resonator.

According to a further embodiment there are provided optical systems that together with the time-shifted Pockels cell of the previously described embodiment generate controllable bursts of laser pulses, where each pulse may have a duration of, for example, less than 1000 ps and the interval between individual laser pulses within the burst may be, for example, less than 10 µsec. As such, the burst of ultrashort laser pulses may combine the benefits of strong short pulse laser interactions with materials together with heat accumulation effects.

According to a further example, a long duration frequency-chirped laser pulse may be injected into a stable optical resonator cavity. A time-shifted Pockels cell as mentioned in one of the previous embodiments is inserted into the cavity together with other polarization optics, defining the passive cavity burst laser generator. If the input laser pulse has vertical (V) polarization upon entering the cavity, the Pockels cell voltage can be programmed to maintain a controllable amount of horizontal (H) polarization, so that the laser pulse will then be trapped within the cavity, while the vertical polarization component of the laser pulse will leak out. By varying the time delay of the voltage present at the Pockels cell relative to the time of arrival of the laser pulse, the respective degrees of V and H polarization can be manipulated, or imposed, or varied. Relative energies of trapped (H polarization) or ejected pulses (V polarization) can be controlled by a passive polarization element that is part of the optical cavity. An external Faraday isolator with polarizer may be used in addition to redirect ejected V polarization component pulses towards a compressor and block any unwanted beam towards the regenerative amplifier. The frequency chirped pulses leaving the resonator are then passed through a compressor, such as a grating or prism, to generate short duration laser pulses. This approach has the advantage of preventing damage on the optical components or operational instability in the regenerative amplifier and avoids implementing costly high damage threshold optical components in the burst resonator. The invention further anticipates the optional use of dispersion control elements within the burst cavity generator to control the final output pulse duration.

According to a further example, an optical amplifying medium may be added to the passive resonator configuration of the burst generator as described above to create an active cavity burst laser generator. In this system a classical Pockels cell uses polarization to control the release of a single laser pulse after several round trips of amplification. In addition the time-delay method of a voltage-controlled Pockels cell may be combined with optical elements for group velocity dispersion to define a regenerative cavity amplifier and burst generator. The output burst of pulses from this modified regenerative amplifier can then be temporally compressed using traditional dispersive optics such as gratings, prisms or phasemasks to provide laser pulses with 3 femtoseconds to 1000 ps duration.

According to a further example, bursts are directly generated from the output of an ultrashort laser oscillator by selectively attenuating individual pulses with polarizers and the time-shift controlled Pockels cell located internally or externally to the oscillator. A control algorithm can be used to select individual or group pulses and to provide widely variable attenuation (0 to 100%) that individually addresses each of the pulses to define an operator determined burst profile shape, number of pulses in each burst, frequency of the bursts and also repetition rate frequency by selectively blocking, for example, alternating input pulses of pulses within the burst. After the burst train is generated, the pulses may be amplified directly in a single or multipass amplifier. Alternatively, the pulses may be temporarily stretched, for example by a prism, fiber, hollow tube, grating, or phasemask pulse stretcher, prior to amplification, and then temporally compressed to recover or partly recover the short pulse duration of the input oscillator pulse. With or without the stretch-compression components, computer algorithms can be used to account for nonlinear gain and gain saturation that distorts the input burst profile as it undergoes several passes of gain.

### BRIEF DESCRIPTION OF THE DRAWINGS

Embodiments of the invention are better understood with reference to the following drawings, in which
Fig.1 shows a flow diagram of an embodiment of a method for generating bursts of laser pulses according to a first aspect;
Fig.2 shows a flow diagram of an embodiment of a method for generating bursts of laser pulses according to a second aspect;
Fig.3 shows a schematic representation of an embodiment of an apparatus for generating bursts of laser pulses according to a third aspect;
Fig.4 shows a schematic representation of an embodiment of an apparatus for generating bursts of laser pulses according to a forth aspect;
Fig.5 shows a schematic representation of an embodiment of an apparatus for generating bursts of laser pulses according to a fifth aspect;
Fig.6 shows a schematic representation of a further embodiment of an apparatus for generating bursts of laser pulses;
Fig.7 shows a schematic representation of a further embodiment of an apparatus for generating bursts of laser pulses;
Fig.8 shows a schematic representation of a further embodiment of an apparatus for generating bursts of laser pulses;
Fig.9 shows a schematic representation of an example of a Pockels cell driving circuit;
Fig.10a-c show an example of Pockels cell time-delayed trigger signals;
Fig.11 shows the temporal shift of timing pulses provided by the time shifter in dependence on analog signal amplitude;
Fig.12 shows a schematic representation of an example of a bridge circuit connected with a Pockels cell;
Fig.13 is a diagram showing the relative timing of laser pulses against the timing of high voltage waveforms driven across the Pockels cell;
Fig.14A-C are oscilloscope diagrams showing three different laser bursts with different amplitude profiles;
Fig.15 is a graph showing the laser pulse duration versus the number of cavity round trips in the case of complete group velocity dispersion (GVD) compensation;
Fig.16 is a graph showing the laser pulse duration versus the number of cavity round trips in the case of incomplete GVD compensation;
Fig.17 shows a schematic representation of an embodiment of a feedback loop control of burst pulses based on processing laser spectroscopy data.

The aspects and embodiments of the invention are described with reference to the drawings, wherein like reference numerals are generally utilized to refer to like elements throughout. In the following description for purposes of explanation numerous specific details are set forth in order to provide a thorough understanding of one or more aspects and embodiments of the invention. It may be evident, however, to one skilled in the art that one or more aspects of the embodiments of the invention may be practiced with a lesser degree of the specific details. In other instances, known structures and devices are shown in block diagram form in order to facilitate describing one or more aspects and embodiments of the invention. The following description is therefore not to be taken in a limiting sense, and the scope of the invention is defined by the appended claims.

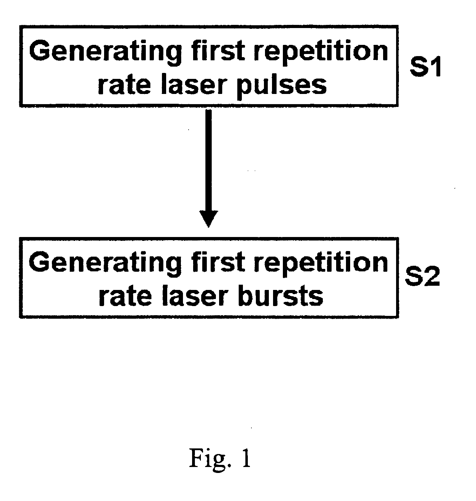

Fig.1 shows a flow diagram of an embodiment of a method for generating bursts of laser pulses. The method comprises generating first repetition rate laser pulses (s1), and generating first repetition rate laser bursts from the repetition laser pulses (s2), the laser bursts each containing a sequence of second repetition rate laser pulses, wherein the second repetition rate is higher than the first repetition rate.

According to a further embodiment of the embodiment of Fig.1 the duration of the second repetition rate laser pulse is in the range 3 fs to 1000 ps, the range covering also all incremental values in the range from 3 fs up to 1000 ps.

For pulse duration optimization, the advent of robust and reliable short pulse lasers is providing a variety of sources with picosecond and femtosecond duration (3 fs to 1000 ps) that offer extremely high intensity for tightly localized energy deposition when focused onto or into materials. Such short pulse duration provides significant benefits for material processing applications in comparison with long laser pulses, such as improvements in surface morphology, and reduced threshold fluence. During interaction of ultrashort pulses with material, laser energy dissipation is tightly confined in the interaction zone that results in minimal collateral damage. Another consequence of this confined energy and small heat affected zone (HAZ) is harnessing nearly all of the laser pulse energy for an efficient ablation process.

According to an example of the embodiment of Fig.1 the first repetition rate is in a range lower than 100 KHz, the range also covering all values incrementally decreasing from 100 KHz.

According to a further example of the embodiment of Fig.1 the second repetition rate is in a range greater than 100 KHz, the range covering all values incrementally increasing from 100 KHz.

According to a further embodiment of the embodiment of Fig.1 the method further comprises individually controlling one or more of the pulse shape, pulse peak power and pulse duration of the second repetition rate laser pulses within the laser bursts. This method may thus control the number of pulses in a burst as well as the envelope shape of individual pulse energies enveloped in one burst.

According to a further embodiment of the embodiment of Fig.1 the laser bursts are generated with the use of a Pockels cell, in particular a Pockels cell arranged within an optical resonator system.

According to a further embodiment thereof the Pockels cell is controlled such that in each round-trip or in each n^{th} round-trip (n = 1, 2,...) of a laser pulse circulating in the resonator system, a desired portion of the laser pulse energy is coupled out of the resonator system.

According to a further embodiment thereof voltage triggering pulses are supplied to the Pockels cell in synchronism with the incoming laser pulses and one or both of the rising edge and the falling edge of the voltage pulses is time-shifted to adjust a desired voltage value when the laser pulse is in the Pockels cell.

According to a further embodiment of the embodiment of Fig.1 the laser bursts are generated such that the peak power of the second repetition rate pulses within one burst is changed according to a desired function, for example in the form of a ramp-up or a ramp-down function, or the pulse duration of the second repetition rate pulses is changed as a whole or individual within one burst.

According to a further embodiment of the embodiment of Fig.1 the first repetition rate laser pulses are generated by a laser system comprising a laser oscillator and a regenerative amplifier working at the first repetition rate or at a fractional value of the first repetition rate.

According to a further embodiment of the embodiment of Fig.1 the second repetition rate pulses are amplified in an amplifying medium arranged within the resonator.

According to a further embodiment of the embodiment of Fig.1 the method further comprises timely stretching the first repetition laser pulses before generating the laser bursts, and compressing the second repetition laser pulses of the laser bursts after generating the laser bursts.

According to a further embodiment of the embodiment of Fig.1 the method further comprises controlling the generation of the laser bursts by a feedback control system that measures laser-induced changes in a target specimen and applies an optimization algorithm for controlling the generation of the laser bursts in dependence of the laser-induced changes.

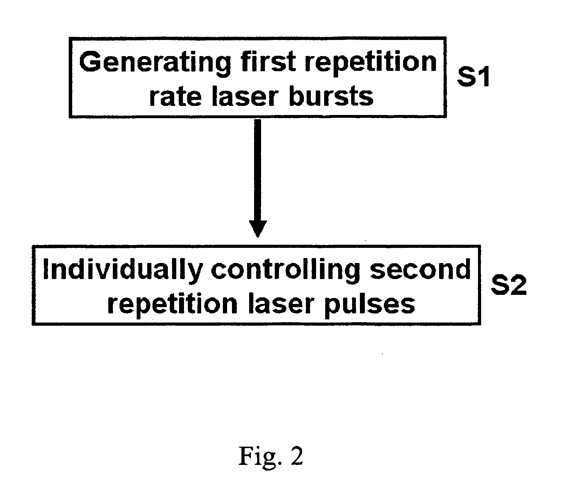

Fig.2 shows a flow diagram of a further embodiment of a method for generating bursts of laser pulses, comprising generating first repetition rate laser bursts (s1), the laser bursts each containing a sequence of second repetition rate laser pulses, wherein the second repetition rate is higher than the first repetition rate, and individually controlling one or more of the pulse shape, pulse peak power and pulse duration of the second repetition rate laser pulses within the laser bursts (s2).

According to a further embodiment of the embodiment of Fig.2 the duration of the second repetition rate laser pulse is in the range 3 fs to 1000 ps, the range covering also all incremental values in the range from 3 fs to 1000 ps.

According to an example of the embodiment of Fig.2 the first repetition rate is in a range lower than 100 KHz, the range covering all values incrementally decreasing from 100 KHz.

According to an example of the embodiment of Fig.2 the second repetition rate is in a range greater than 100 KHz, the range covering all values incrementally increasing from 100 KHz.

According to a further embodiment of the embodiment of Fig.2 thereof the laser bursts are generated with the use of a Pockels cell.

According to a further embodiment thereof the Pockels cell is controlled such that for each laser pulse entering the Pockels cell, a desired portion of the laser pulse energy is passed by the Pockels cell system.

According to a further embodiment of the embodiment of Fig.2 the laser bursts are generated with the use of a Pockels cell, in particular a Pockels cell arranged within a resonator system.

According to a further embodiment thereof the Pockels cell is controlled such that in each round-trip or in each n^{th} round-trip (n = 1, 2,...) of a laser pulse circulating in the resonator system, a desired portion of the laser pulse is coupled out of the resonator system.

According to a further embodiment thereof voltage pulses are supplied to the Pockels cell in synchronisation with the incoming laser pulses and one or both of the rising edge and the falling edge of the voltage pulses is time shifted to adjust a desired voltage value when the laser pulse is in the Pockels cell.

According to a further embodiment of the embodiment of Fig.2 the laser bursts are generated such that the peak power of the second repetition rate pulses within one burst is changed according to a desired function, for example, in the form of a ramp-up or a ramp-down function, or the pulse duration of the second repetition rate pulses is changed as a whole or individual within one burst.

According to a further embodiment of the embodiment of Fig.2 the method further comprises generating first repetition rate laser pulses by a laser system comprising a laser oscillator and a regenerative amplifier working at the first repetition rate or at a fractional value of the first repetition rate, and generating the laser bursts from the first repetition rate or fraction value of the first repetition rate laser pulses.

According to a further embodiment of the embodiment of Fig.2 the second repetition rate laser pulses are amplified in an amplifying medium arranged within the resonator.

According to a further embodiment of the embodiment of Fig.2 the method further comprises temporally stretching the first repetition rate laser pulses before generating the laser bursts, and compressing the second repetition rate laser pulses of the laser bursts after generating or modifying the laser bursts.

According to a further embodiment thereof the Pockels cell is not arranged within a resonator system.

According to a further embodiment of the embodiment of Fig.2 the method further comprises controlling the generation of the laser bursts by a feedback control system that measures laser-induced changes in a target specimen and applies an optimization algorithm for controlling the generation of the laser bursts in dependence of the laser-induced changes.

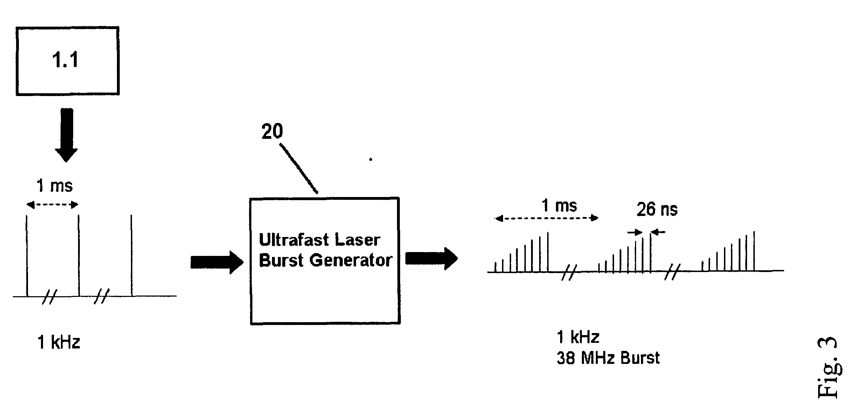

Fig.3 shows a schematic representation of an embodiment of an apparatus for generating bursts of laser pulses according to a third aspect. In a specific embodiment thereof, laser pulses emitted by a laser source 1.1 and having a first repetition rate of, for example, up to 100 KHz are fed into a burst generator 20, and within the burst generator 20 bursts are generated with the first repetition rate, the bursts containing pulses with a second repetition rate of, for example, 100 KHz or higher, in particular 1 MHz or higher (5, 10, 20, 40, 100 MHz or higher), and a number of, for example, 30 pulses can be generated within each burst or lower wherein the number can also be higher or lower than 30 pulses, in particular the number of pulses can be within the range 2 to 5000 pulses. The duration of the second repetition rate laser pulses can be in the range 3 fs to 1000 ps.

According to a further embodiment of the embodiment of Fig.3 the burst generator comprises a Pockels cell.

According to a further embodiment thereof the burst generator comprises an optical resonator system, the Pockels cell being arranged within the optical resonator system.

According to a further embodiment thereof the Pockels cell is controllable such that in each round-trip or in each n^{th} round-trip (n = 1, 2,...) of a second repetition rate laser pulse circulating in the resonator system, a desired portion of the second repetition rate laser pulse energy is coupled out of the resonator system.

According to a further embodiment thereof the apparatus further comprises a Pockels cell control circuit for supplying or removing a voltage to or from the Pockels cell, the Pockels cell control circuit comprising a time-shifting unit for shifting the time for supplying or removing the voltage from a predetermined time to another time.

According to a further embodiment thereof the Pockels cell control circuit is arranged for supplying voltage pulses to the Pockels cell in synchronisation with the laser pulses arriving at the Pockels cell, and the time shifting unit is arranged for shifting in time one or both of the rising edge and the falling edge of the voltage pulse to adjust a desired voltage value when the laser pulse is in the Pockels cell.

According to a further embodiment thereof a peak voltage of the voltage pulses is chosen such that Pockels cell biased with the peak voltage rotates the polarization state of incoming laser pulses by 90°.

According to a further embodiment thereof the Pockels cell is arranged near an end mirror of the resonator system.

According to a further embodiment of the embodiment of Fig.3 the apparatus further comprises at least one polarization-dependent passive optical element arranged in the resonator system.

According to a further embodiment thereof the resonator system comprises at least one polarization-dependent optical element to serve as a polarization-dependent beam splitter arranged to receive laser pulses coming from the Pockels cell.

According to a further embodiment thereof the apparatus further comprises a first optical path between the beam splitter and an end mirror of the resonator system, and a second optical path between the beam splitter and an output port of the resonator system.

According to a further embodiment thereof the apparatus further comprises a regenerative amplifier arranged in the optical path between the pulsed laser system and the burst optical resonator system.

According to a further embodiment thereof the apparatus further comprises a temporal-pulse stretching unit arranged in the optical path between the pulsed laser system and the burst generator for temporally stretching the first repetition rate laser pulses, and a temporal-pulse compressing unit arranged in the output optical path of the burst generator for temporally compressing the second repetition rate laser pulses.

According to a further embodiment thereof the apparatus further comprises a feedback control mechanism for controlling the generation of the laser bursts by measuring laser-induced changes in a target specimen and applying an optimization algorithm for controlling the generation of the laser bursts in dependence of the laser-induced changes.

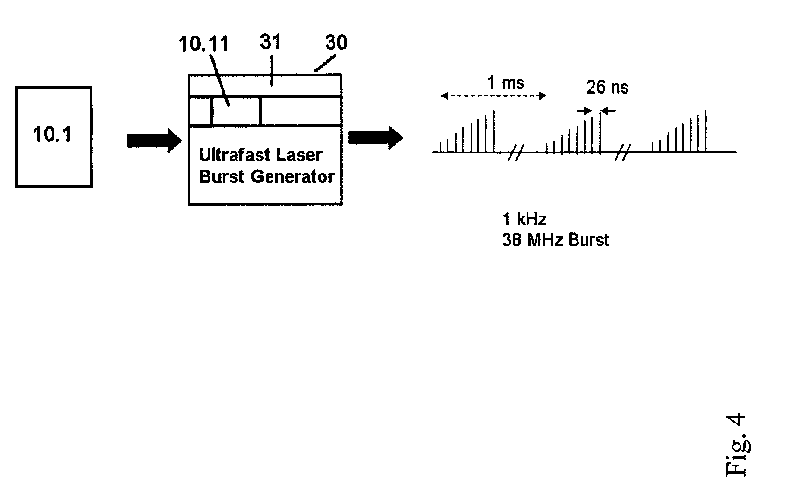

Fig.4 shows a schematic representation of a further embodiment of an apparatus for generating bursts of laser pulses according to a forth aspect. The apparatus comprises a pulsed laser system 10.1 generating laser pulses, and a burst generator 30 comprising a resonator system 31, the resonator system comprising a Pockels cell 10.11.

According to a further embodiment thereof the Pockels cell is controllable such that in each round-trip or in each n^{th} round-trip (n = 1, 2,...) of a laser pulse circulating in the resonator system, a desired portion of the laser pulse energy is coupled out of the resonator system.

According to a further embodiment thereof the apparatus further comprises a Pockels cell control circuit for supplying or removing a voltage to or from the Pockels cell, the Pockels cell control circuit comprising a time shifting module for shifting the time for supplying or removing the voltage from a predetermined time to another time.

According to a further embodiment thereof the Pockels cell control circuit is arranged for supplying voltage pulses to the Pockels cell in synchronism with laser pulses arriving a the Pockels cell, and the time shifting unit is arranged for shifting in time one or both of the rising edge and the falling edge of the voltage pulse to adjust a desired voltage value when the laser pulse is in the Pockels cell.

According to a further embodiment thereof a peak voltage of the voltage pulses is chosen such that the Pockels cell biased with the peak voltage rotates the polarization state of the incoming laser pulses by 90°.

According to a further embodiment thereof the Pockels cell is arranged near an end mirror of the resonator system.

According to a further embodiment thereof the apparatus further comprises at least one polarization-dependent passive optical element arranged in the resonator system.

According to a further embodiment thereof the resonator system comprises at least one polarization-dependent optical element to serve as a polarization-dependent beam splitter arranged to receive laser pulses coming from the Pockels cell.

According to a further embodiment thereof the apparatus further comprises a first optical path between the beam splitter and an end mirror of the resonator system, and a second optical path between the beam splitter and an output port of the resonator system.

According to a further embodiment thereof the apparatus further comprises an amplifying medium arranged in the resonator system.

According to a further embodiment thereof the apparatus further comprises a temporal-pulse stretching unit arranged in the optical path within the pulse laser system 10.1 for temporally stretching the laser pulses, and a temporal-pulse compressing unit arranged in the output optical path of the optical resonator system for temporally compressing the laser pulses.

According to a further embodiment thereof the apparatus further comprises a feedback control mechanism for controlling the generation of the laser bursts by measuring laser-induced changes in a target specimen and applying an optimization algorithm for controlling the generation of the laser bursts in dependence of the laser-induced changes.

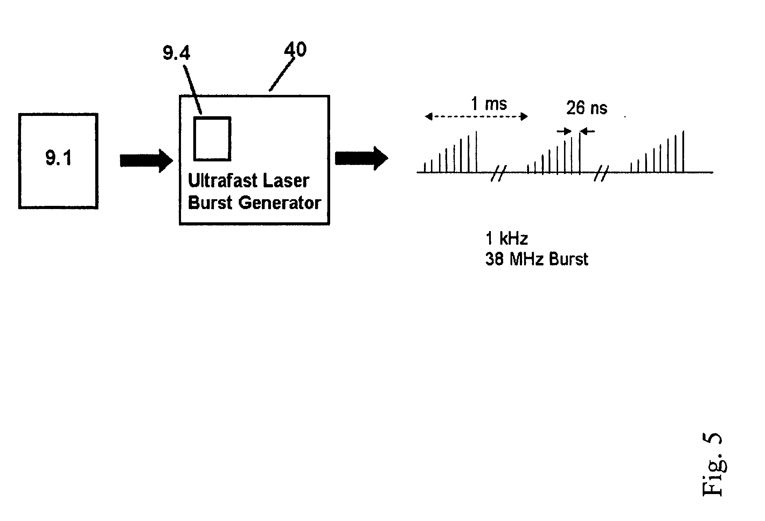

Fig.5 shows a schematic representation of a further embodiment of an apparatus for generating bursts of laser pulses according to a fifth aspect. The apparatus comprises a pulsed laser system 9.1 generating laser pulses at a repetition rate in a range greater than 1 MHz, the range covering all values incrementally increasing from 1 MHz, and a burst generator 40 comprising a Pockels cell 9.4, the Pockels cell 9.4 being arranged to generate bursts of laser pulses and to individually control one or more of the pulse shape, pulse peak power and pulse duration of the laser pulses to define the laser bursts.

According to a further embodiment thereof the apparatus further comprises a Pockels cell control circuit for supplying or removing a voltage to or from the Pockels cell, the Pockels cell control circuit comprising a time shifting unit for shifting the time for supplying or removing the voltage from a predetermined time to another time.

According to a further embodiment thereof the Pockels cell control circuit is arranged for supplying voltage pulses to the Pockels cell in synchronism with the laser pulses arriving at the Pockels cell, and the time shifting unit is arranged for shifting in time one or both of the rising edge and the falling edge of the voltage pulse to adjust a desired voltage value when the laser pulse is in the Pockels cell.

According to a further embodiment thereof the apparatus further comprises an amplifying unit for amplifying the laser pulses as received from the Pockels cell.

According to a further embodiment thereof the apparatus further comprises a temporal-pulse stretching unit arranged in the optical path between the Pockels cell and the amplifying unit for temporally stretching the laser pulses, and a compressing unit arranged in the optical path behind the amplifying unit for temporally compressing the laser pulses.

According to a further embodiment thereof the amplifying unit comprises an amplifying medium and a plurality of mirrors and other optical components as understood by practitioners of the art for multiply passing the input beam through the amplifying medium.

According to a further embodiment thereof the amplifying medium is optically pumped by another laser beam, in particular at a repetition rate corresponding to the repetition rate of the laser bursts.

According to a further embodiment thereof the apparatus further comprises a feedback control mechanism for controlling the generation of the laser bursts by measuring laser-induced changes in a target specimen and applying an optimization algorithm for controlling the generation of the laser bursts in dependence of the laser-induced changes.

As was already outlined above, in some embodiments a Pockels cell is employed and operated at a high repetition rate, in particular a repetition rate in a range of 100 KHz to 500 MHz, for the purpose of generating high repetition rate bursts of short-duration laser pulses. Such laser bursts can be generated in various embodiments that use the time-delayed controlled Pockels cell method in combination with polarization optics, optical resonators, multi-pass amplifiers, chirped pulse amplification (CPA), and/or regenerative amplifiers, and other optical components of common knowledge to a practitioner of the art in short pulse laser systems.

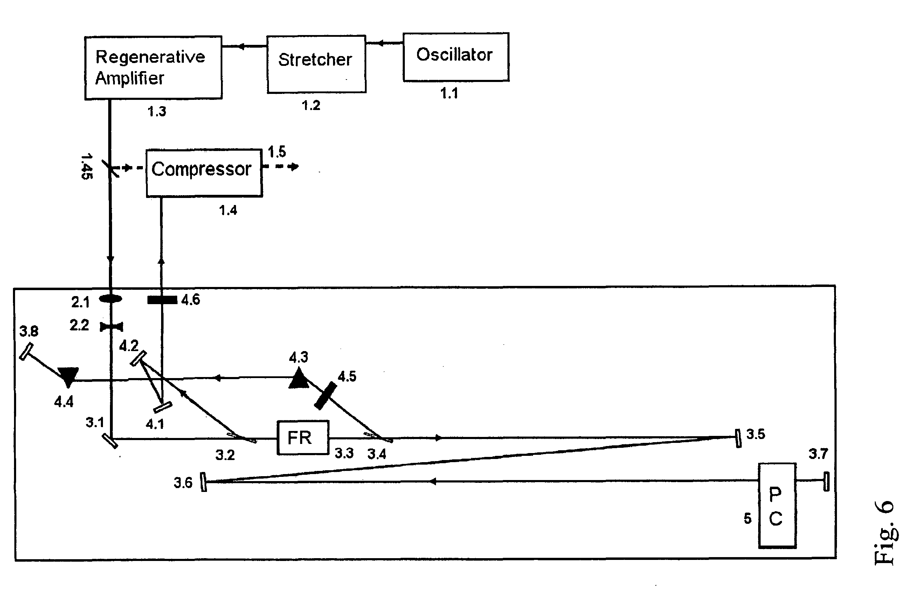

Fig.6 shows a schematic representation of a further embodiment of an apparatus for generating bursts of laser pulses. The embodiment as shown in Fig.6 is a further embodiment of the embodiment as was illustrated above in connection with Fig.3 and it is basically a schematic design of a passive burst generator positioned beside an ultrafast laser system operating based on the Chirped Pulse Amplification (CPA) technique. In Fig.6, an optical oscillator 1.1 generates femtosecond pulses with 76.28 MHz repetition rate and in general it can be any type of ultrafast oscillator with any repetition rate. These pulses are passed through a Faraday isolator (not shown) that blocks any back reflection of light to the oscillator 1.1 and stretched to about 200 ps through stretcher 1.2. The stretched pulses get amplified in a regenerative amplifier 1.3 and guided into the passive burst cavity (or compressor in a standard configuration by using a tilted mirror 1.45) to generate high repetition rate bursts. The output of the passive burst cavity is then guided to the compressor to shorten the duration of the ultrafast burst pulses.

As a non-limiting case, the regenerative amplifier provides pulses with V polarization. To inject pulses efficiently into the passive burst resonator, an optical telescope consisting of lenses 2.1 and 2.2 adjusts the beam waist size and location to match the waist size and position as defined by the burst resonator optics. Each lens is mounted on the linear translation stages for this mode matching. Mirror 3.1 guides the beam to the polarizer 3.2, Faraday isolator 3.3 and second polarizer 3.4. A Faraday isolator is positioned in reverse direction and does not affect the polarization of the pulse in the forward direction (optical pass from polarizers 3.2 to 3.4) but it rotates the polarization by 90 degree in passing in the reverse direction. The angle of both polarizers is tuned to pass laser pulses with V-polarization. Polarizer 3.4 plays the role of cavity mirror (not end mirror) and it is the place internally where cavity (injection) is fed. The V-polarized beam after passing through polarizer 3.4 and reflecting from cavity mirrors 3.5 and 3.6 enters to the Pockels cell 5. Pockels cell 5 is placed close to the cavity end mirror 3.7 to provide sufficient time (< 3 ns) for each laser pulse to pass twice through the Pockels cell, in opposite directions, without experiencing a large change in the Pockels cell voltage on the incoming and outgoing passes. In this way, the pulse delay circuits can be manipulated with improved control on the total polarization retardation accumulated by the laser polarization in two passes of the Pockels cell. End mirrors 3.7 and 3.8 can be formed as concave mirrors.

In the following, the action of the Pockels cell 5 will be considered in three different operational ranges. First, there is no voltage applied to the Pockels cell 5. A V-polarized beam after it enters to the burst cavity through polarizer 3.4, propagates to the last mirror of cavity 3.7 and folds back, and since there is no change in the polarization direction, the laser pulse will pass polarizer 3.4, and leave the cavity. Faraday isolator 3.3 will change the V-polarization to H-polarization resulting in reflection of the beam from the surface of polarizer 3.2. The reflected beam will be redirected by mirrors 4.1 and 4.2 to the compressor 1.4 where the pulse duration will be reduced accordingly, and leave the compressor as a compressed burst beam 1.5. Since the compressor is designed to accept a V-polarized beam, the H-polarized uncompressed beam leaving the burst resonator is converted to a V-polarized beam before entering to the compressor 1.4 by using a half-waveplate 4.6. With zero bias voltage on the Pockels cell, the burst generator rejects every pulse entering the resonators on the first round trip to provide only a single pulse for each input pulse.

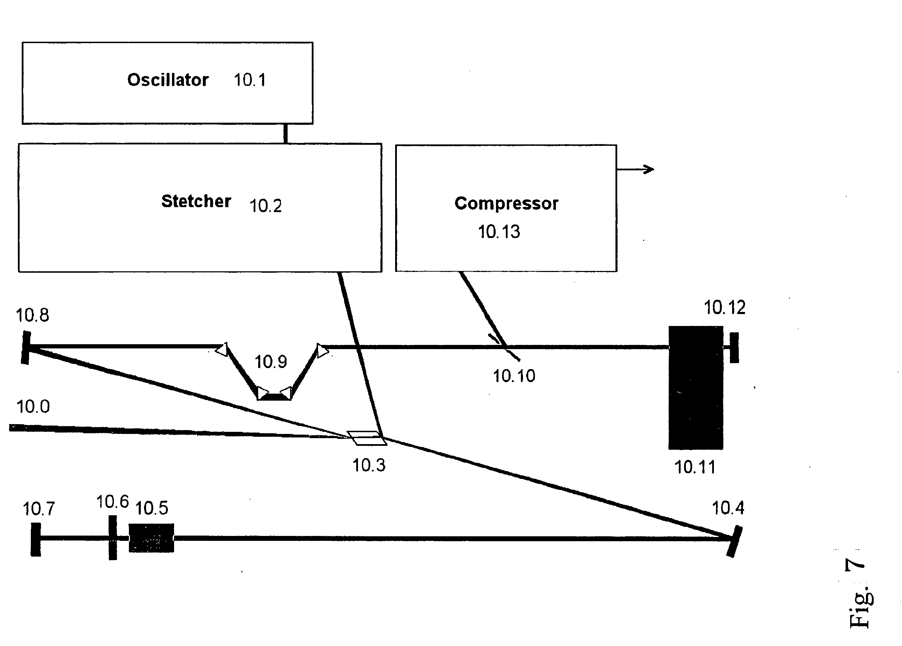

In the second operating range, appropriate high voltage is applied to the Pockels cell 5. The voltage at the Pockels cell 5 (or 10.11 in Fig. 7) necessary to fully convert the incoming V-polarized beam to an outgoing H-polarized beam is typically about 2.4 kV for the present two-pass configuration. If the Pockels cell voltage is held on for a time much more than the cavity length round-trip time (for example, 26.2 ns) and synchronously triggered on near the time when the laser pulse is injected to the cavity at polarizer 3.4, the incoming V-polarized beam will change to horizontal polarization after passing twice through the Pockels cell. The H-polarized beam returning to the polarizer 3.4 now undergoes high reflection from the polarizer surface and is redirected towards the other end mirror 3.8 of the burst cavity.

Group velocity dispersion in the Pockels cell crystal as well as in other resonator optics causes a temporal stretching of the pulses circulating in the burst resonator which is compensated herein with the dispersion pair of prisms 4.3 and 4.4. Other means of dispersion compensation (i.e. gratings, thin film mirrors) may also be employed. The prism angles are preferentially applied at the Brewster angle to reduce Fresnel reflection loss. Since the Brewster angle transmits the entire V-polarized beam, a half-waveplate 4.5 is put in the pass to convert the H-polarization to the V-polarization prior to entering the prisms. The beam passes through both pairs of prisms and reflects back through mirror 3.8 and passes again through the two pairs of prisms for further GVD compensation. The V-polarized beam is converted to H-polarization by passing through half-waveplate 4.5 a second time. This beam reflects from the surface of the polarizer 3.4 to continue inside the burst cavity, having now traveled one full round trip inside the burst cavity. The reflected H-polarized beam will propagate through mirrors 3.5 and 3.6 and enter the Pockels cell. Since the Pockels cell is in full polarization retardation (assumes high voltage is still held high), it will rotate the polarization by 90 degree in two pass propagation to create a V-polarization beam. This polarization state will pass through polarizer 3.4 and undergo a conversion to H-polarization after passing through the Faraday isolator 3.3, and reflect from the surface of polarizer 3.2. As a result, each pulse entering the burst resonator will be held inside the cavity for only one and half round trips before being fully ejected. Alternatively, if the Pockels cell voltage bias was switched to zero prior to the second arrival of the laser pulse at the cell, the polarization would remain horizontal and the pulse would then be trapped by the resonator for another round trip pass. The voltage switching must be faster than the cavity round trip time, for example, of 26.2 ns in the present case.

In a third operating method, a partial voltage is applied to the Pockels cell such that elliptical polarization is created regardless of the state, either V or H polarization, of the pulse entering the Pockels cell. A preferred mode of burst operation requires the bias voltage to be varied on each round trip of the trapped laser pulse to provide varying amounts of polarization retardation, returning an elliptically polarized beam with varying eccentricity to the polarizer 3.4. The voltage-specified ellipticity controls the portions of the laser pulse energy that will be passed through (V polarization component) or reflect (H polarization component) at the polarizer 3.4, leading to controllable amounts of ejected (V-polarization) and resonator trapped (H-polarization) pulse energy on each round trip cycle. By varying the voltage applied to the Pockels cell, rejected pulses with variable pulse energy are ejected each round trip (i.e. 26.2 ns) until insignificant energy remains in the resonator. In this way, a burst train is produced with a high repetition rate defined by the cavity length. The burst train is produced with variable pulse train length and pulse energy envelope. Such pulse burst trains have significant advantages in interactions with materials. Generated burst test examples are presented below.

Fig.7 shows a schematic representation of a further embodiment of an apparatus for generating bursts of laser pulses. The embodiment as shown in Fig.7 is a further embodiment of the embodiment as was illustrated above in connection with Fig.4. There is shown a schematic design of an active cavity burst generator in which burst pulses are generated inside the cavity and are simultaneously amplified through active gain material 10.3, for example, a Ti:Sapphire crystal or an optical fiber amplifier. In this design, a femtosecond seed beam that is generated by oscillator 10.1 enters to the pulse stretcher 10.2 resulting in temporally stretching of the femtosecond pulse duration, for example, to about 200 ps. This beam has V-polarization which is preferentially reflected from the surface of the active material 10.3 (Ti:Sapphire crystal) cut at Brewster angle and propagated towards cavity mirror 10.4. The beam passes through a Pockels cell 10.5 and a quarter waveplate 10.6 before returning on reflection from a cavity end mirror 10.7. The action of passing the pulse twice through the quarter waveplate is to change the pulse polarization from V to H. With zero bias voltage applied, the Pockels cell does not further modify the beam polarization. The returning H-polarized beam then enters the polarization splitting Brewster cut facet of the active medium 10.3, and is amplified. The active material could be optically pumped by a second light source (laser, diode, lamps, or other means) through one or both facet ends or pumped through the side or combinations thereof. In Fig.7, the active material is pumped by beam 10.0 through one facet (pump laser is not shown). The amplified beam is redirected by mirror 10.8 to the group velocity dispersion (GVD) compensator unit 10.9. This unit consists of four prisms made of highly dispersive materials; however, grating, thin-film and other types of GVD devices may also be employed. The GVD unit is tuned to compensate the GVD that accumulates in the circulating laser pulse as it passes through the resonator optical materials, particularly, the active gain medium and the Pockels cell 10.5 and Pockels cell 10.11. For maximum energy efficiency, the H-polarized beam enters the prisms 10.9 at Brewster angle for preferentially high transmission. The H-polarized beam then passes through polarizer 10.10, designed for high transmission of H-polarized light and high reflection of V-polarized light. Pockels cell 10.11 is positioned after polarizer 10.10 in close proximity to the last mirror of the cavity 10.12 such that two laser pulse passes are completed in a short enough time (for example, less than 2 ns) such that the Pockels cell voltage is nearly constant for better polarization control. At this time, the Pockels cell 10.11 has zero voltage applied. The H polarized beam is reflected by the second end mirror 10.12 and returns as an H-polarized beam to pass efficiently through the polarizer 10.10, prisms 10.9, and undergo gain again on passing the amplifier 10.3. The pulse enters the first Pockels cell 10.5, where a high bias voltage is selected to provide a quarter wave polarization retardation to null the quarter wave shift provided by the quarter waveplate 10.6. On two passes of the quarter wave plate and Pockels cell 10.5, and reflection from the end mirror 10.7, the returning beam maintains H polarization, resulting in the pulse retracing its path through the amplifier and prism compressor and becoming locked inside the cavity for successful resonator injection.

In traditional operation of regenerative amplifiers, the laser pulse is circulated several passes until the laser gain medium is saturated. At this time, the maximally amplified laser pulses are ejected by applying a full voltage to the second Pockels cell 10.11 just prior to the pulse arrival. The H-polarized beam is converted to V polarization after two passes, which then leads to ejection of the beam by the polarizer 10.10. In non-traditional operation of this regenerative amplifier (burst mode), by applying appropriate delay to the time shifter to mistune the high voltage pulse synchronization with the arrival of the laser pulse at the Pockels cell, the relative amounts of laser pulse energy leaked outside the cavity or retained inside the cavity for further amplification is controlled by the eccentricity of the elliptical polarization state created by the Pockels cell 10.12. The rejected V-polarized pulse will enter to the compressor 10.13 for complete or partial compression to shorter pulse duration. Overall, the pulses circulating in the active burst resonator are amplified each round trip such as in a standard regenerative amplifier, but with the advantage in the present embodiment of using a time delay shifter on the Pockels cell 10.11 to release controlled fractions of circulating and amplified pulse energy and thereby generate burst trains with controllable number of pulses and individual control of pulse energy. By including a gain medium in the active burst resonator, bursts may be created directly from a laser oscillator 10.1, bypassing the need for an expense regenerative amplifier such as noted by 1.3 in the embodiment of Fig. 6. It should be understood by practitioner of the art that alternative resonator arrangements to that shown in Fig. 7 can also function as an active resonator burst generator, for example, comprising of one Pockels cell such as in the embodiment of Fig. 6, but including an amplifying medium in the resonator.

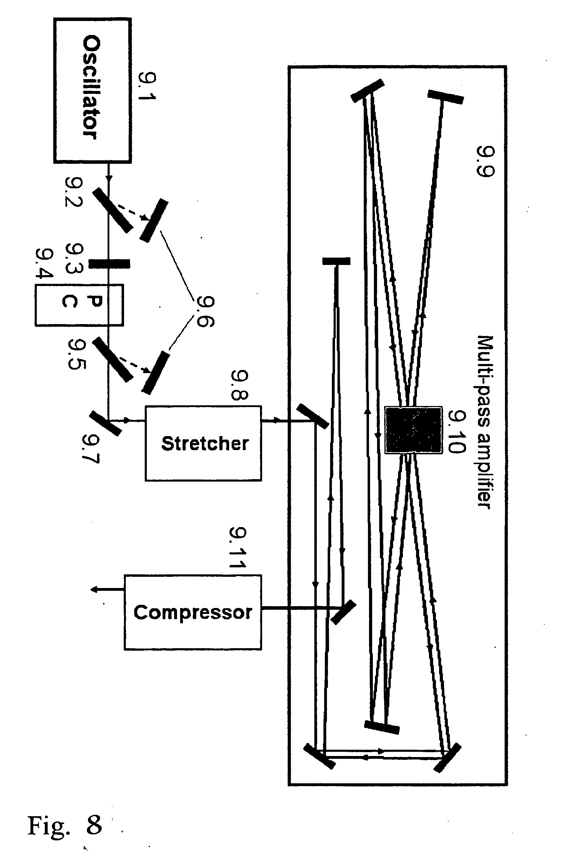

Fig.8 shows a schematic representation of a further embodiment of an apparatus for generating bursts of laser pulses.

The embodiment as shown in Fig.8 is a further embodiment of the embodiment as was illustrated above in connection with Fig.5. This device does not rely on a burst optical cavity for generating the high-repetition rate bursts. There is shown an embodiment of an apparatus for generating bursts of laser pulses where low-energy seed burst profiles are first generated by a short pulse oscillator and external Pockels cell modulator and then injected into a multi-pass amplifier. The apparatus comprises an oscillator 9.1 generating femtosecond or picosecond laser pulses with a repetition rate of 76.28 MHz; in general it can be any type of ultrafast-pulse duration oscillator with any repetition rate. For the present example, the oscillator output beam has H-polarization, and polarizer 9.2 is arranged to pass only the H-polarized beam and redirects any type of imperfection in the beam towards beam stop 9.6. The H-polarized beam changes to V-polarized beam after passing through a half-waveplate 9.3 and then enters the Pockels cell 9.4. Another polarizer 9.5 passes only the H polarized beam and reflects any V-polarization component of the beam into a second beam stop 9.6. Pockels cell 9.4 will not affect the state of polarization if no high voltage is applied and consequently all of the beam will be rejected by polarizer 9.5 and absorbed in the beam stop 9.6. An intermediate voltage applied to the Pockels cell will generate elliptical polarization, leading to a variable ratio of pulse energy that is dumped in the beam stop 9.6 (for V polarization) or passed by polarizer 9.5 to the pulse stretcher (for H polarization). Alternatively, biasing the Pockels cell at a maximum voltage (for example, about 6 kV) will provide a half waveplate phase retardation, which leads to all of the laser beam energy to pass through polarizer 9.5 and into the pulse stretcher. Applying time shifted high voltage to the Pockels cell 9.4 to synchronize with the laser pulses entering from the high repetition rate oscillator results in various degrees of elliptical polarization to be generated on individual pulses as controlled by the time shift. As such, varying degrees of H-polarized laser pulse energy is generated, which after passing the polarizer 9.5 leads to the desired results of temporally shaped burst pulse trains. These shaped pulses can be amplified in a multipass amplifier. For this purpose, transmitted light through polarizer 9.5 is redirected into pulse stretcher 9.8 to make temporally shaped pulses longer in duration. Long duration burst pulses enter the multi-pass pulse amplification system 9.9 to gain energy (four-pass amplifier arrangement is drawn but in general it can be more or fewer passes than four). A desirable number of passes will typically be selected to saturate the gain of the amplifier medium after formation of one or a series of burst trains. As an example, two pump laser beams may be focused from opposite directions into the active material 9.10 (i.e. Ti:Sapphire) to be collinear and overlapping with the seed burst pulses. Fiber, liquid, slab and semiconductor gain media may also be considered. After completing the multiple passes, the frequency chirp in the amplified pulse train is reduced in the compressor 9.11 to shorten the pulse duration. In this arrangement, the number of burst pulses practically available is limited by both gain saturation and gain lifetime in the active material 9.10 but each pulse of the burst train can be individually controlled in pulse energy to thus generate high frequency temporally shaped burst profiles in the 100 KHz to 1 GHz range. In another embodiment of Fig. 8, the stretcher and compressor are not removed, which is suitable when sufficiently low energy is required for each pulse within the burst train so as to avoid high intensity damage of optical components in the multi-pass amplifier.

In the present inventions, the Pockels cell is applied in all three types of burst generators of embodiments of Figs. 6 to 8 for the purpose of using laser beam polarization control to adjust the pulse energy of each new pulse released or formed within a burst train. The method of polarization control is well known to a practitioner skilled in the art. The present Pockels cell method offers exceptional fast switching time and high repetition rate to facility the formation of bursts comprising of high repetition rate trains of pulses in the various optical configurations.

The present application also relates to a Pockels cell driving circuit, comprising an electrical device having two input terminals for inputting two electrical clock signals and four output terminals for outputting four clock signals, and a Pockels cell driver for applying and removing a voltage to a Pockels cell, the Pockels cell driver being connected to the outputs of the electrical device.

According to an example thereof the electrical device comprises a digital signal generator for generating digital signals on four output terminals, an analog arbitrary wave form generator for generating output signals on four output terminals, and a time shifting unit having four first input terminals coupled to the output terminals of the digital signal generator, four second input terminals coupled to the output terminals of the analog arbitrary wave form generator, and four output terminals.

According to an example thereof the time shifting unit is arranged to time shift a digital signal as received from the digital signal generator according to an amplitude of an analog signal as received from the analog arbitrary wave form generator.

According to an example thereof the Pockels cell driver comprises four input terminals and four electrical switches wherein the electrical switches are to be connected with terminals of the Pockels cell.

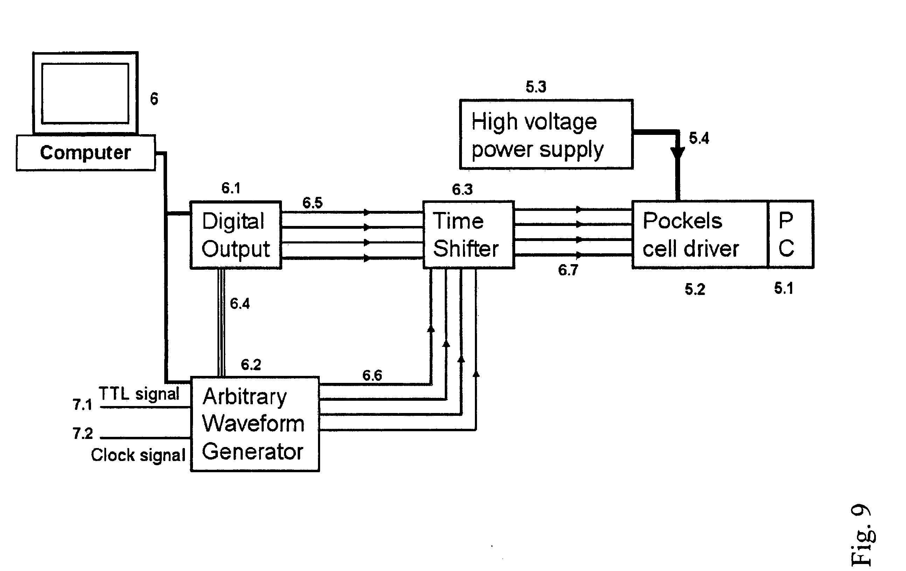

Referring to Fig. 9, there is shown a schematic representation of an example of a Pockels cell driving circuit together with the Pockels cell which is to be driven. The Pockels cell driving circuit comprises a digital signal generator for generating digital signals on a number of output terminals, an analog arbitrary wave form generator for generating output signals on a number of output terminals, and a time shifting unit having a number of first input terminals coupled to the output terminals of the digital signal generator, a number of second input terminals coupled to the output terminals of the analog arbitrary wave form generator, and a number of output terminals.

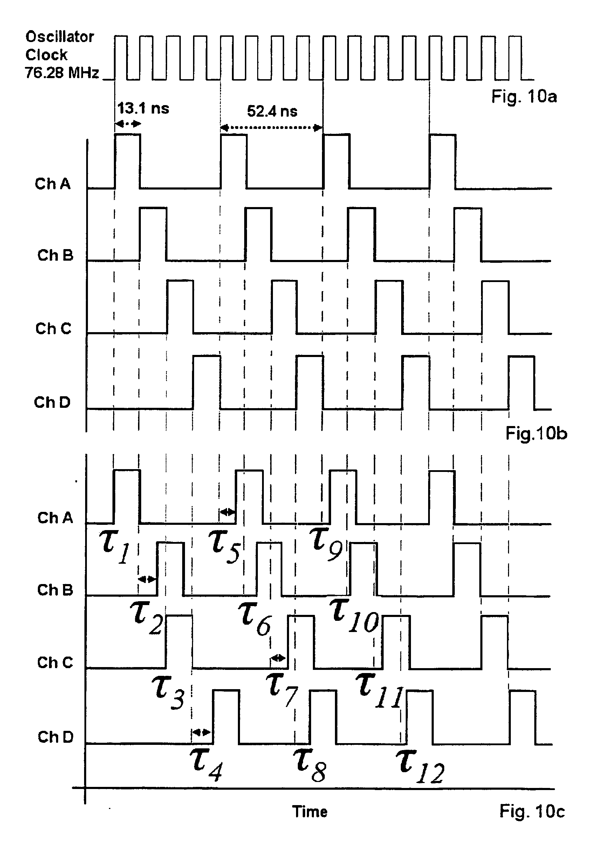

In all above burst designs, adjusting the delay in the time shifter plays a critical role in defining the shape of burst pulses, the number of pulses in each burst train, the energy amplitude of each pulse, and the time separation between pulses, which collectively control the type of interaction of these pulse trains with different materials. In the embodiment of Fig.9, digital signal generator 6.1 and analogue waveform generators 6.2 generate four channels of digital and arbitrary analogue waveforms, respectively. Both electronic devices which can be in the form of electronic cards or microchips, are synchronized with electronic and/or optical signals using ribbon connections 6.4, optical beams, and/or optical fibers. A burst clock pulse for time synchronization with each burst 7.1 and a laser pulse clock synchronized with each pulse to be formed in a burst train are connected to the analogue waveform generator. In the passive burst resonator configuration of Fig. 6, the burst clock is provided by an injection clock signal from the regenerative amplifier 1.3 (for example, 1 KHz) and the laser pulse clock is provided by the femtosecond laser oscillator 1.1 (for example, 76.28 MHz, see Fig. 10a), which was made to match twice the frequency (2 x 38.14 MHz) of the burst resonator cavity. The main function of the digital generator is to provide four synchronized timing channels of digital clock signals that begin each time a trigger pulse is received from the regenerative amplifier clock. The four channels produce staggered trigger pulses (see Ch A, B, C, and D in Fig. 10b), each delayed by the interval between laser clock pulses (i.e. 1/76.28 MHz = 13.1 ns) and each operating at a frequency of one-quarter of the laser pulse frequency (i.e. 76.28 MHz/4 = 19.07 MHz). The time difference between the pulses is therefore four times the clock step (4 x 13.1 ns = 52.4 ns). The number of burst pulses generated is an operator control parameter that is loaded into the computer and fed to the waveform generator each burst cycle for controlling the number of laser pulses generated each burst cycle.

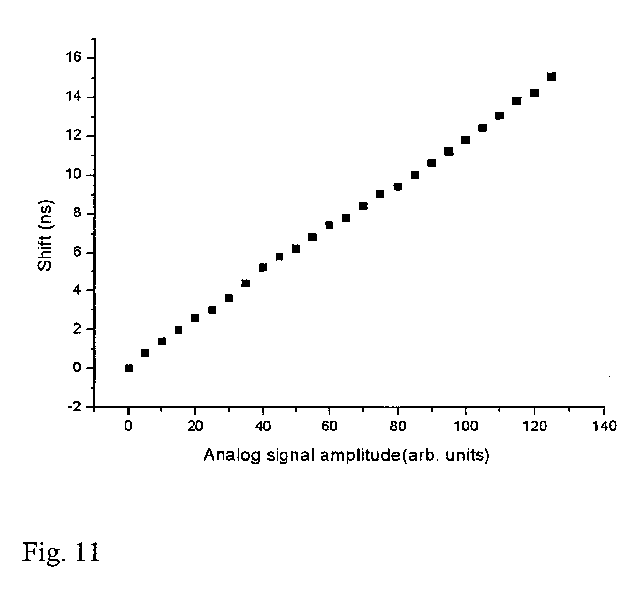

The analogue arbitrary waveform generator 6.2 in Fig.9 generates analogue voltage pulses on four output channels 6.6 with values that change each laser pulse clock cycle as specified by a set of computer commands. Time shifter 6.3 receives the four channel clock signals from the digital card 6.1 via bus 6.5 and four channels of analogue signals from the waveform generator 6.2 through ribbon connectors 6.6. Since the digital and analogue waveforms are time synchronized, the value of analogue signal set in each of Channels A, B, C, and D at each clock step is applied by the time shifter to delay the relaying of the digital clock signals in respective channels A, B, C, and D prior to transmission to the Pockels cell driver 6.2 via bus 6.7. The analogue channel voltage is operator determined and set by the computer to provide a positive integer 8 bit number variable from 0 to 127 to the time shift card. As various amplitudes are applied, the digital clock pulses undergo a precise time delay shift that increases from zero to 15.2 ns for the present design as the analogue signal increases from 0 to 127. The relationship is linear as shown by the measured data in Fig.11. With this arrangement, pulse delays from 0 to 15.2 ns can be computer set with time steps of 15.2ns/ 128 = 0.12 ns. The four clock channels A, B, C, and D are independent from each other and each channel can be time shifted independently.

Referring to Fig.10, there is shown an example of Pockels cell time-delayed trigger signals, wherein a laser-oscillator (76.28 MHz) clock signal (Fig.10a) is converted by the Arbitrary Waveform Generator and Digital Output card into 4 (channels A, B, C, and D) lower frequency (19.07 MHz) clock signals (Fig.10b) that in turn are further time-shifted with independent control of time delays on each pulse in each channel as provided by the Digital Delay Signal and Time Shifter modules.

Fig.10c shows examples of clock outputs of the time shifter 6.3. Comparing Fig.10c with Fig.10b, time shifts of τ₁, τ₂, τ₃, τ₄, ... on various channels have been applied by the waveform generator analogue signals via bus 6.6. Ch A and C and Ch B and D are linked pairs channels for driving high voltage push/pull switches in the Pockels cell, discussed below. In one mode of operation, the linked paired channels share the same time delay on each 4-pulse cycle. In one example of this operating mode, computer controlled variation of the analogue signals generate specific clock pulse delays of τ₁=τ₃=0, τ₂=τ₄=0, τ₅=τ₇=0 τ₆=τ₈=0 τ₉=τ₁₁=0, τ₁₀=τ₁₂=0 and τ₂ > τ₅ > τ₆ > τ₉ > τ₁₀ > τ₁ > where τᵢ is the delay applied to the Pockels cell in triggering the i^{th} pulse high voltage switch (i=1, 2, 3,...) with respect to the timing of the original laser oscillator clock signal, and ultimately with the arrival time of laser pulses at the Pockels cell. The time-delayed clock signals (10c) from the time delay card 6.3 connect to the Pockels cell driver 5.2 through wires 6.7 to control the on and off triggering of high voltage switches that present the high voltage from generator 5.3 connected via 5.4, to bias the Pockels cell 5.1 in Fig.9.

It is to be understood that other values of clock rates and range of time delays may be used and other configurations of time-delay circuits may be applied for controlling the time triggering of the Pockels cell, as is well known to a practitioner of the art. Because the oscillator trigger pulse is synchronized with time delay boxes to match the injection time of laser pulses into a burst cavity resonator of twice the cavity length, the laser pulses formed into the burst resonator appear at the Pockels cell at a frequency of one half of the oscillator trigger pulses. In this way, the pairs of time-delayed clock signals (Channels A-C and B-D) in Fig. 10c can be accurately synchronized (i.e. +/-100ps) with precise degrees of time delay offset (0 to 15.2 ns) with the arrival of laser pulses at the Pockels cell in the burst resonator.

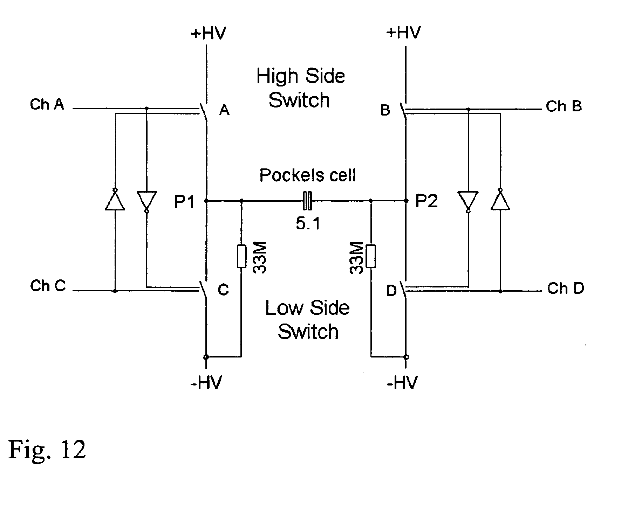

Referring to Fig.12, there is shown a schematic representation the electronic layout of the high voltage bridge circuit and appropriate clock channel (A, B, C, and D) inputs for switching open and closing the high voltage Pockels cell driver. In this arrangement the Pockels cell driver 5.2 uses four input clock signals to control four high voltage switches, and therefore control the on and off triggering of two high voltage poles P1 and P2, thus providing two high voltage pulse cycles to control the formation of two laser pulses within a burst. Each pair of clock channels (A-C and B-D) controls one push-pull switch in the Pockels cell driver. The operation of a double push-pull switch or bridge Pockels cell driver is as follows. Channel A closes high-side switch A and opens low-side switch C synchronously to present a positive high voltage (+HV) on pole P1. Likewise Ch C opens high-side switch A and closes low-side switch C synchronously to present a negative high voltage (-HV) on pole P1. The Channel B and D control signals for push-pull switch B and D operate in a similar way, presenting positive or negative high voltage at pole P2. The Pockels cell crystal 5.1, sandwiched between poles P1 and P2, then experiences various combinations of zero potential (P1 and P2 both +HV or both -HV) or high potential (P1 and P2 with opposite polarity: i.e. +HV/-HV or -HV/+HV). For reliable switching in the present device, the shortest time difference possible between trigger pulses in Ch A and Ch C or between Ch B and Ch D in one cycle (i.e. 52.4 ns in Fig. 10a) is 15 ns, but shorter times are anticipated in newer generations of Pockels cell controllers. For the present example, 26.2 ns is the average value of this time difference. However, this value can be varied by the use of the 15.2 ns time delays to vary from 11.2 (26.3 ns - 15.2 ns) to 41.4 ns(26.3 ns - 15.2 ns), although 15 ns is the minimum allowed. With appropriate alignment, a Pockels cell provides no phase retardation for polarization modification of the laser beam when poles P1 and P2 are both at the same high potential states (+HV/+HV or -HV/-HV), and including instantaneous times when the poles are at identical intermediate potential values during the dynamics of voltage switching. Each push-pull switch has a 33 MOhm resistor connected from high voltage terminals P1 and P2 to the negative pole of the HV supply to effectively ground and drain charges on both poles of the Pockels cell with a slow time constant.

The objective for controlling the amount of polarization retardation is to present an intermediate voltage bias value to the Pockels cell 5.1 at an appropriate time during the voltage rise or fall of one pulse cycle by synchronizing the voltage switching times relative to the arrival time of laser pulses at the Pockels cell crystal.

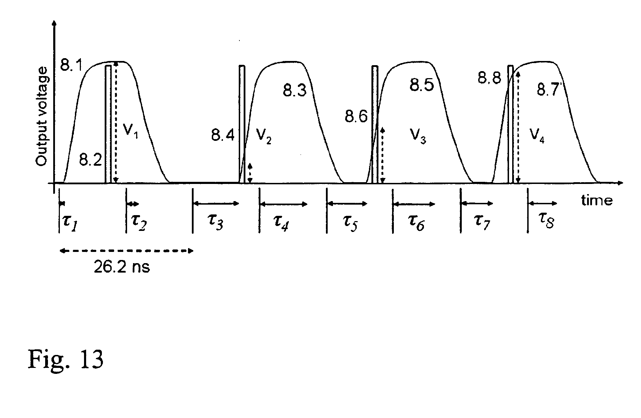

Referring to Fig.13, there is depicted a diagram showing the timing of the high voltage waveform driven across the Pockels cell relative to temporal positioning of laser pulses (short square waveform) arriving at the Pockels cell crystal inside a resonator burst generator for different values of time delay τ₁, τ₂, τ₃, ... τ₈. In this example, the high voltage profiles 8.1, 8.3, 8.5, 8.7 evolving across the Pockels cell crystal (5.1 in Fig. 12) and its coincidence with four trapped laser pulses 8.2, 8.4, 8.6, 8.8 in the burst cavity are shown together with the instantaneous value of Pockels cell voltage (V₁, V₂, V₃, V₄) at the coincidence of the laser pulse. In the first cycle, the Ch A and Ch B analogue signals generated by waveform generator 6.2 is synchronized for zero time delay (i.e. τ₁=0 and τ₂=0) in such a way that the resonator laser pulse 8.2 arrives in the Pockels cell crystal to coincide with the onset of the peak high value V₁ of the pulse bias voltage 8.1. This laser pulse arrives shortly after (i.e., 10 ns) the Ch A clock pulse triggers open switch A to present a +HV at pole P1 (Fig. 12) and is slightly before or nearly synchronous with the Ch B trigger pulse which presents a +HV at pole P2, thus creating the fast rising and falling (V₁) waveform within the first 26.3 ns half cycle in Fig. 13. The peak voltage (V₁) is selected for full polarization switching of V to H polarization (or vice versa) that is used in the various embodiments above to trap (inject) an external laser pulse on the first cycle inside the burst resonator cavity, for example, by Pockels cell 5 in the passive cavity of Fig.6 or Pockels cell 10.5 in the active cavity in Fig. 7. In this arrangement, Channels A and B control the first laser pulse in the burst resonator.

After the trapped pulse travels its first full round trip through the burst cavity and returns to the Pockels cell, Ch C delivers a trigger pulse to close switch C in Fig. 12, and present a +HV to the P1 pole, creating the rising voltage pulse 8.3, with instantaneous value V₂ appearing across the poles P1 and P2 (P2 at -HV) at the arrival time of the laser pulse 8.4 according to Fig. 13. The advantageous application of a time delay of τ₃ to the Ch C trigger pulse serves to delay this voltage rise such that the laser pulse 8.4 arrives in the crystal near in time to the start of the voltage rise. This timing presents only a modest crystal bias voltage of V₂, which is much less than V₁ for a long time delay (such as 10 ns). In this situation, the crystal induces a partial phase retardation which converts only a small portion of the incoming H-polarized laser pulse 8.4 to V-polarization. This leads to trapping of most of the laser pulse energy (surviving H-polarized beam) for the next cycle inside the burst cavity and ejecting of only the small energy component of the newly created V polarized light later when it reaches the polarizing beam splitter 3.4 or 10.10, for example, in the embodiments of Fig. 6 or 7, respectively. A Faraday isolator 3.3 will convert the ejected pulse from V-polarization to H-polarization, and a polarizer 3.2 will redirect the pulse for compression 1.4 or 10.13, creating the first laser pulse of the burst train. The portion of laser pulse energy 8.4 ejected is advantageously controllable, increasing from low (or zero) energy, and rising monotonically as the τ₃ delay time is reduced, until full ejection of the laser pulse energy is driven with τ₃= 0 ns. This example assumes that the voltage fall, as triggered by Ch D, is also suitably delayed, for example, by the same value as Ch C, such that τ₃ = τ₄.

In the third cycle, the delay time τ₅ and τ₆ for Ch A and Ch B, respectively, are set to identical values that may be smaller or larger than τ₃. For τ₅ smaller than τ₃, a higher value of high voltage bias, V₃, is presented to the Pockels cell at the time of arrival of the laser pulse 8.6 in the third round trip, leading to a bigger portion of the surviving H-polarized pulse to be converted to V polarization. Consequently, a bigger portion of the laser pulse leaks out of the passive burst cavity which constructs the second pulse of the burst. This larger bias value may be advantageous to compensate for the decreasing laser pulse energy at each round trip, and thereby provide a burst train of pulses that each have similar pulse energy.

In the fourth cycle, τ₇ and τ₈ for Ch C and Ch D, respectively, are set to identical values that may be smaller or larger than τ₅. For τ₇ smaller than τ₅, a higher value of voltage bias, V₄, is presented to the Pockels cell at the time of arrival of the laser pulse 8.8 in the fourth round trip, leading to a bigger portion of the surviving H-polarized pulse to be converted to V polarization. Consequently, a bigger portion of the laser pulse leaks out of the passive burst cavity which constructs the third pulse of the burst train.

This procedure will continue until all the trapped H-polarized laser pulse energy is leaked out of the passive burst cavity, resulting in the generation of one burst of laser pulses. By adjusting delay times of τᵢ (i=1, 2, 3,...) various desired shapes of burst pulse envelopes can be tailored, including time cycles where zero bias voltage is synchronously aligned to create time gaps with no pulse ejection within the burst train envelope.
The invention also anticipates alternative methods of tuning the time-delayed Pockels bias voltages, V₂, V₃, V₄, V₅, ..., by means well known to a practitioner of the art.

For example, a time delay circuit or laser beam path adjustment can be applied to delay the laser pulse arrival to a time after the peak bias voltage appears at the Pockels cell. This places the laser pulse advantageously in different positions along the falling slope of the bias voltage pulses 8.1, 8.3, 8.5, etc., of Fig. 13, as controlled by the values of even numbered delay times (τ₂, τ₄, τ₆, τ₈, ...) selected for the Ch B and D clock signals. In this way, the bias voltage values (V₁, V₂, V₃, V₄, V₅...) can be individually varied from zero to the maximum for H-to-V or V-to-H polarization conversion, as noted for the method above that placed the laser pulse on the leading edge of voltage rise. Here, the portions of ejected and trapped laser pulse energies are determined similarly by the polarization components as described above. A combination of both methods, with the laser pulse placed on leading and falling edges of the Pockels cell voltage pulses (8.1, 8.3, 8.5, etc.), is anticipated to offer more flexible control of the burst profiles created. This includes advantages in reducing the pulse-to-pulse variation of the laser pulse energy due to clock and circuit timing jitter when the laser coincides with the steepest edges of the Pockels cell voltage rise or fall.

Alternatively, the first pulse of the burst train may be created in the first injection cycle for the embodiment of Fig. 6 by adjusting τ₁ and/or τ₂ to slightly reduce the V₁ crystal potential, and retain a small component of V polarization in the laser pulse for ejection through the beam splitting polarizer 3.4.

Alternatively, the clock signals for Channels B and D in Fig. 10b can be interchanged to also provide a two-pulse sequence of high voltage pulses as shown in Fig. 13 for each trigger clock cycle.

Alternatively, the pairs of clock signals used to create one voltage waveform (8.1, 8.3, 8.5,...) may be independently time shifted such that τⱼ and τⱼ₊₁ (j = 1, 3, 5, 7,...) are not equal in value. This serves to independently address each waveform to increase or decrease the duration of the Pockels cell bias voltage. Decreased pulse duration can reduce the peak bias voltage when the voltage fall begins before the voltage rise can reach its maximum peak value. This method adds a third component to the present invention for controlling the effective bias voltage, V₁, V₂, V₃, ..., in addition to method of placing laser pulses along the rising and falling edges of the full-amplitude Pockels cell voltage waveforms 8.1, 8.3, 8.5, etc.

Alternatively, the analogue time-delay signals can be adjusted for selected round trip cycles of the laser pulse to shift the Pockels cell voltage waveform (8.3, 8.5, 8.7,...) completely outside of the arrival time of the laser pulse. There will be no conversion (0%) of H to V polarization and no leakage of the laser pulse, creating a gap or a missing laser pulse in the generated burst train. This gap may be generated for the embodiment of Fig. 6 by specifying a large or maximum time delay of τⱼ = τⱼ₊₁ = 15.2 ns (j = 3, 5, 7,...) for clock signal pairs (A and B or C and D) and/or adjusting the laser pulse synchronization with the high voltage waveform by electronic time delay modules and/or laser beam path delays. A repetitive application of this condition on alternate round trip cycles, for example, τ₃-τ₄. τ₇-τ₈, τ₁₁-τ₁₂, ..., results in creation of burst trains with one half of original burst repetition rate. Other combinations can create one-third, one-quarter, etc. frequency burst trains, and combinations thereof that are attractive for modifying and controlling material interactions on time scales (1 ns to 100 ms) significant for enhancing and reducing energy diffusion and dissipation effects, driving material phase changes, and controlling sample morphology, to name only a few.

Alternatively, select clock pulses can be eliminated to hold a high or low voltage state on the Pockels cell crystal for periods longer than one round trip time in the resonator. For example, removing the first Channel D clock pulse and the second Channel A clock pulse would serve to merge the second 8.3 and third 8.5 high voltage waveforms in Fig. 13, causing a full +HV bias for V₃ that leads to removal of the second pulse in the burst train. Advantages such as presented in the previous paragraph are equally available to this method.

As was outlined above, the embodiment of Fig.6 defines one non-limiting arrangement of the present invention for passive burst generation. The round trip length of the burst cavity can be, for example, 394 cm, yielding a round trip time of 26.2 ns and a repetition rate of 38.14 MHz (half of laser oscillator 1.1 frequency) for the ejected pulses that constitute the burst.

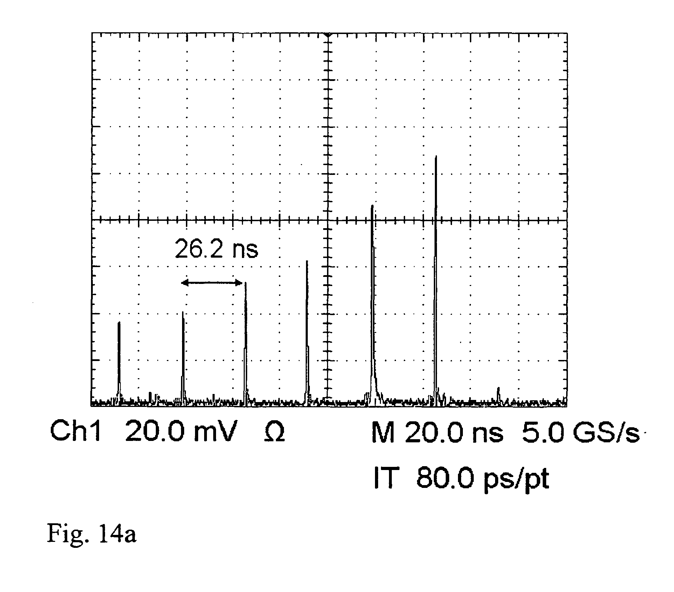

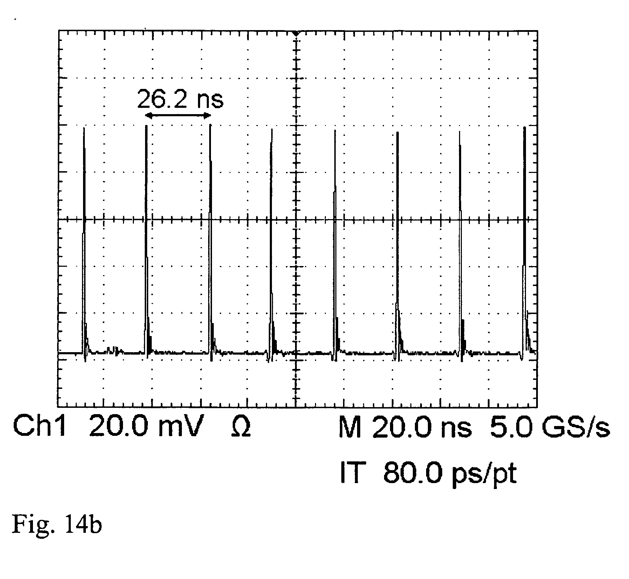

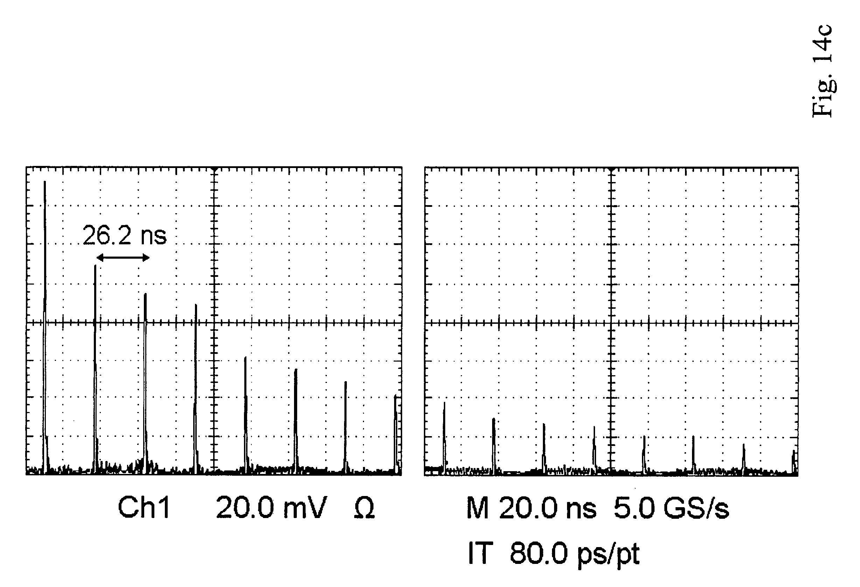

Referring to Fig.14A-C, analogue waveform settings of the arbitrary waveform generator can be adjusted to generate different profiles with respect to the course or progress of the pulse peak intensity within the burst by using the apparatus of Fig.6. Shaping the energy distribution of pulses within the laser burst train to optimization in a particular application is a major opportunity. For example, bursts of pulses can be generated with ramping up (Fig.14A) or ramping down amplitudes (Fig.14C) or constant amplitudes (Fig.14B), respectively. The pulse profiles were obtained with the apparatus as shown in the embodiment of Fig.6 by appropriate adjustment of the analogue waveforms of the arbitrary waveform generator to control the time delays as described by Fig. 13.

Operator specified values can be computer fed into the arbitrary waveform generator to specify appropriate time delay values and advantageously control the pulse energy of individual pulses that form into the burst train. Different profiles and repetition rates within the burst envelop with respect to the course or progress of the pulse peak intensity can therefore be arbitrarily defined and varied. For example, bursts of pulses can be generated where the pulse-energy envelop ramps up or ramps down monotonically or remains constant. Gaussian, Lorentzian, super-Gaussian, exponential rising, exponential falling and many other forms of pulse energy envelopes are anticipated by the invention. Combinations of short repetitive bursts, changes to the repetition rate, sinusoidal, and aperiodic distributions may be generated by the various embodiments described by the present invention.

The shaping of the energy distribution of pulses within the laser burst train is a significant opportunity to optimize numerous laser applications. In several laser material structuring applications, it is necessary to deliver lower laser pulse energy on the substrate at the beginning of machining, for example, in order to gently softening the material prior to the arrival of higher energy pulses that lead to high material removal rates without inducing shocks, high stresses, or microcracks. Further, heat accumulation effects at high burst repetition rate offer advantages when focused into materials of creating small laser interactions zones of high temperature that offer advantages for thermal annealing and thermal passivation of materials during laser processing. Heat accumulation also reduces temperature cycling during multi-pulse laser processing that improves the overall energy efficiency (less lost heat) for machining, for example, and reduces damage in the heat-affected zone.

For laser micro-structuring of multi-layered or cladded materials, like electronic circuit boards, electronic microchips, flat panel display, metal sheet, art-work, painted materials, lab-on-a-chip devices, and many more, burst profiles offer advantages for processing structures (marks, holes, annealing, welding, etc.) in a single step or several step process for advantageously optimizing the laser interaction intensity in each material layer to speed process time, improve precision and control, and reduce collateral damage. For example a stronger laser pulse energy is preferred at the beginning of a burst train to penetrate a hard cladding layer while lower pulse energy in the trailing part of the burst are preferred for the more delicate and precise machining of lower temperature and/or softer materials in the core. For this purpose, burst laser pulses with a ramping down energy envelope may be defined by the suitable time shift values in the Arbitrary Waveform Generator. It has been demonstrated experimentally that sixteen pulses in each burst can be generated with amplitudes ramping down, as shown in Fig. 14C.

Fig.14A-C each show a burst of pulses, respectively. The pulses are separated by 26.2 ns so that the repetition rate (second repetition rate) is 38.46 MHz. The bursts are separated by 1 ms so that the repetition rate (first repetition rate) is 1 KHz. Fig.14A shows a burst of pulses with ramping up amplitudes. In some laser material structuring applications it is necessary to deliver lower laser energy on the substrate in the beginning of machining which results in softening the material by early arrived pulses which in turn leads to lower stress and/or minimized microcracks. Then higher energy pulses arrive later on for faster and efficient material removing. The energy amplitude of pulses in the burst is selected through appropriate high voltage time shift adjustment resulting, for example, in a burst of six laser pulses ramping up. Fig.14C shows a burst of pulses with ramping down amplitudes. For laser micro-structuring of hard materials like metals, for faster and precise machining it is useful to have strong laser energy in the beginning to interact with cladding and lower laser energy for core. For this purpose burst laser pulses with ramping down amplitudes are designed through high voltage time shift adjustment. It has been proven experimentally that sixteen pulses in each burst can be generated with amplitudes ramping down.

Fig.14B shows a burst of pulses with equal amplitudes. There are also many applications in which it is advantageous to apply laser pulses of constant energy and/or peak intensity to the material to be worked on.

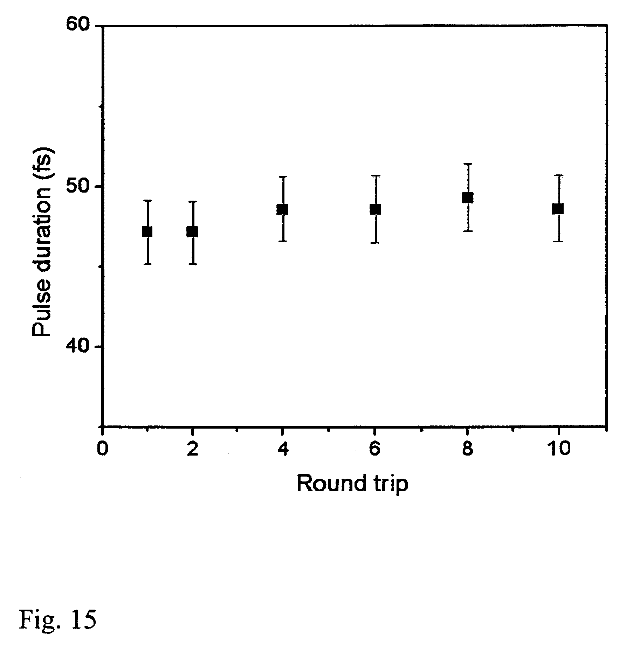

Another important factor of significance in laser applications, particularly laser material processing, is the pulse duration. To monitor the resonator effects of frequency dispersion on the duration of each individual pulses emerging in the burst, a pulse trapped inside the cavity is fully released after a prescribed number of round trips and injected into an optical auto-correlator for measuring the pulse duration. Pulse duration values for round trip cycles of 1 to 10 are shown in Fig. 15. Here, the group velocity dispersion (GVD) caused by the BBO crystal in the Pockels cell 5, and other optics is compensated by the double pair of prisms 4.3 and 4.4 in the embodiment of Fig.6, and a minimum pulse duration of 45 fs is maintained for each pulse (first to tenth) in the burst train.

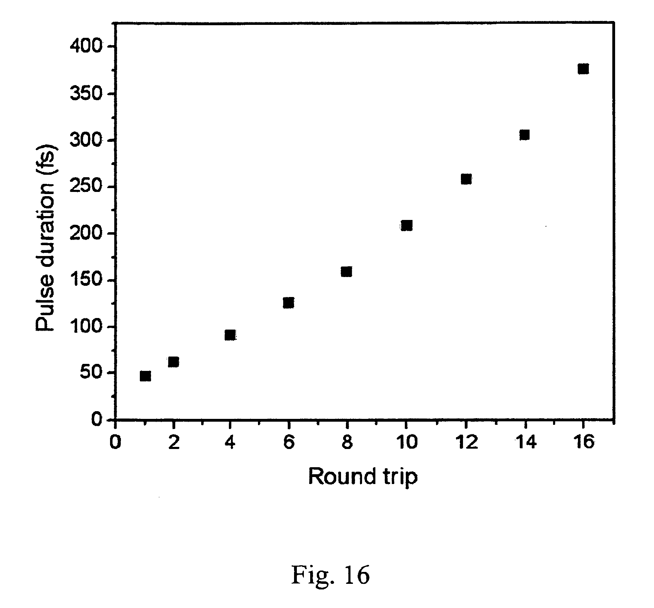

The present invention also includes a means for varying the duration of individual laser pulses that constitute the burst and thereby offer further advantages for controlling laser interactions in materials. A misalignment of one or more of the prisms 4.3 and 4.4 in the embodiment of Fig.6 generates an uncompensated amount of GVD that accumulates in the trapped laser pulse on each round trip in the cavity. Each pulse leaving the resonator therefore has increasing (or decreasing) amounts of frequency chirp that cannot be uniformly compensated by the compressor 1.4. Hence, the pulse duration of ejected pulses can be made to increase, or decrease, or first increase and then decrease, or vice versa, depending on the prism 4.3 and 4.4 alignment and by mistuning the compressor 1.4 alignment. As an example, Fig. 16 shows an increase of the pulse duration from 45 to 375 fs as pulse are ejected on the first round trip through to the 16^{th} round trip for the passive resonator configuration of Fig. 5. Using this technique it is possible to generate a burst of pulses with monotonically increasing or decreasing or both increasing/decreasing pulse duration in the range of femtosecond to nanosecond duration (3 fs to 1000 ps).

Referring again to the embodiment as shown in Fig.8, it is possible to obtain bursts having variable number of pulses of up to about 150 pulses, controlled by the time shift method of Pockels cell voltage synchronization with the oscillator laser pulses 9.1, and with pulse-to-pulse separation, for example 13.1 ns, determined by the oscillator 9.1 frequency (for example, 78.28 MHz = 1/13.1 ns). Inverted replicas of burst profiles may be obtained at the polarization beam splitter 9.7, each having opposite H and V polarization, and offering variable energy on each pulse, with the constraint that total energy from each pair of H- and P-polarized pulses is fixed by the pulse energy of the oscillator 9.1. Only one of these burst beams is selected for CPA by the multipass amplifier 9.9.

The present invention includes in general the generation of as few as two pulses to define a single burst, as well as increasing pulse numbers that appear at 78.28 MHz rate (or less frequently) of the oscillator 9.1. A practical limit on the maximum number of pulses per burst train is given by overheating of the Pockels cell driver 9.4, which for the present example are 240,000 pulses per second. This value is expected to increase in the future with advancing Pockels cell technology. With this limit, the maximum number of pulses in each burst depends on the number bursts generated per second. As an example, one could generate 240,000 pulses in one burst each second, or 2 pulse could be generated in each burst for up to 120,000 bursts per second. Other considerations also include gain saturation in the amplifier media for the embodiment of Fig. 8, as well as the other embodiments.

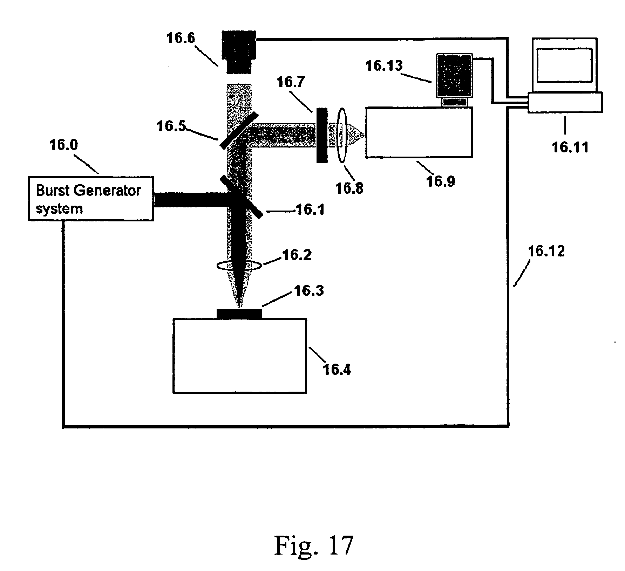

Referring to Fig.17, there is shown a schematic representation of an example of a feedback loop control that analyses real-time data of burst laser interactions and applies algorithms to optimize the burst profile. The feedback loop control serves the purpose to control the laser-induced phenomena at a target sample or to control operation of a device while undergoing processing or diagnostic probing with the burst laser beam. The energy, pulse duration, and frequency of pulses can each be widely varied by the time shift method herein to create a wide range of burst pulse profiles. The embodiment in Fig. 17, and various therein, offers automatic generation of the burst profiles for preferentially controlling laser burst interactions in materials and devices to improve laser processing, conversion processes, and device performance. In Fig.16, shaped ultrafast laser burst trains generated by the burst generator system 16.0, is guided to the target sample 16.3 through beam splitter 16.1 and lens 16.2. The sample target 16.3 is located on a position system, for example, a 3-axis motion stage 16.4. The consequence of interaction of ultrafast laser burst pulses with target 16.3 results in a variety of physical phenomena such as linear and nonlinear absorption, self-focusing, refocusing, plasma defocusing, self-phase modulation, supercontinuum generation, harmonics generation, fluorescence, photoluminescence, shock wave generation, heating, phase changes, photochemical modification, ablation, and many more phenomena. Such processes are monitored by recording optical images and laser-induced emissions (TeraHertz radiation, infrared, visible, ultraviolet, vacuum ultraviolet, extreme ultraviolet, and x-ray spectrum) from the bottom, top, and/or sides of the target sample. As a nonlimiting example, light emission from the target is collected by the laser lens 16.3, passed through beam splitter 16.1 and guided by beam splitter 16.5 to spectrometer 16.9 and imaging camera 16.6. Filters 16.7 are positioned before the entrance of the spectrometer 16.9 to filter out unwanted spectral components such as the scattered laser light from the burst beam. Convex lens 16.8 focuses the beam into the spectrometer 16.9 or other collection optic (fiber optic) that in turn is relayed to a spectrograph. Spectra recordings of the laser interaction volumes can be captured by camera 16.13, for example, a CCD or an intensified-CCD or a diode or a photomultiplier tube, and observed by computer 16.11 to provide time-integrated, time-resolved, or spatial resolved spectral recordings or combinations thereof. A part of the light emissions that is passed through beam splitter 16.5 is captured by a camera 16.6, for example, a CCD camera or a time-gated intensified camera, and connected to the computer 16.11. By adjusting the target position using 3D stage controls or other means of beam steering, the exact position of the laser interaction can be adjusted according to camera and spectrograph recordings analyzed by the computer 16.11. Based on spectral recordings, optical images, and other information using other types of diagnostics (acoustics, temperature, physical properties, electronic circuit signals, optical device signals, biological device signals, etc.) not shown in Fig. 15, the computer runs a self-learning algorithm to vary and tune the shape and specification of the burst pulse profiles by changing time shift values on Channel A, B, C, and D clock signals, defining a feedback loop system 16.12 for optimizing the burst profile. The algorithm controls the energy and pulse duration of individual pulses within the burst profile and defines the frequency of pulses, which can vary or be aperiodic with each burst, and the number of pulses constituting the burst envelop.

It is to be further understood that numerous changes in the details of the embodiments of the invention will be apparent to persons of ordinary skill in the art having reference to this description. It is contemplated that such changes and additional embodiments are within the true scope of the invention as claimed. In particular, it is to be understood that the various features and details as described in connection with one embodiment, can also be applied to another embodiment where possible. In particular, features and details described in connection with embodiments of a method can be transferred and applied to embodiments of an apparatus where possible and also vice versa features and details described in connection with embodiments of an apparatus can be transferred and applied to embodiments of a method.

## Claims

1. A method for generating bursts of laser pulses, comprising:
- generating first repetition rate laser pulses;
- generating first repetition rate laser bursts from the first repetition rate laser pulses, the first repetition rate laser bursts each containing a sequence of second repetition rate laser pulses,
wherein the second repetition rate is higher than the first repetition rate,
wherein the first repetition rate laser bursts are generated in a burst generator with the use of a Pockels cell; and
- individually controlling one or more of the occurrence, the pulse shape, pulse peak power, and pulse duration of the second repetition rate laser pulses within the first repetition rate laser bursts, by supplying voltage pulses to the Pockels cell in synchronism with incoming second repetition rate laser pulses and one or both of a rising edge and a falling edge of the voltage pulses is time-shifted to adjust a desired voltage value when a second repetition rate laser pulse is in the Pockels cell.

2. The method according to claim 1, wherein
the duration of the second repetition rate laser pulses is in the range of 3 fs to 1000 ps.

3. An apparatus for generating bursts of laser pulses, comprising:
- a pulsed laser system (1.1, 1.3) generating first repetition rate laser pulses,
- a burst generator receiving the first repetition rate laser pulses and generating first repetition rate laser bursts, the first repetition rate laser bursts each containing a sequence of second repetition rate laser pulses, wherein the second repetition rate is higher than the first repetition rate, wherein
the burst generator comprises a Pockels cell (5) and a Pockels cell control circuit (5, 6) configured to individually control one or more of the occurrence, the pulse shape, pulse peak power, and pulse duration of the second repetition rate laser pulses within the first repetition rate laser bursts, by supplying or removing a voltage to or from the Pockels cell (5), the Pockels cell control circuit (5, 6) comprising a time-shifting unit (6.3) configured to shift the time for supplying or removing the voltage.

4. The apparatus according to claim 3, wherein
the burst generator comprising an optical resonator system (20), the Pockels cell (5) being arranged within the optical resonator system (20).

5. The apparatus according to claim 4, wherein
the Pockels cell (5) is controllable such that in each round-trip or in each n^{th} round-trip (n = 1, 2,...) of a second repetition rate laser pulse circulating in the resonator system (20), a desired part of the second repetition rate laser pulse is coupled out of the resonator system (20).

## Patentansprüche

1. Verfahren zur Erzeugung von Bursts von Laserpulsen, aufweisend:
- das Erzeugen von Laserpulsen mit einer ersten Wiederholrate;
- das Erzeugen von Laserbursts mit der ersten Wiederholrate aus den Laserpulsen mit der ersten Wiederholrate, wobei die Laserbursts mit der ersten Wiederholrate jeweils eine Folge von Laserpulsen mit einer zweiten Wiederholrate enthalten,
wobei die zweite Wiederholrate größer ist als die erste Wiederholrate,
wobei die Laserbursts mit der ersten Wiederholrate in einem Burstgenerator unter Benutzung von einer Pockelszelle erzeugt werden; und
- das individuelle Kontrollieren von einem oder mehreren von dem Auftreten, der Pulsform, Pulsspitzenleistung, und Pulsdauer der Laserpulse mit der zweiten Wiederholrate innerhalb der Laserbursts mit der ersten Wiederholrate, durch das Versorgen der Pockelszelle mit Spannungspulsen synchron mit eingehenden Laserpulsen mit der zweiten Wiederholrate und wobei eine oder beide von einer ansteigenden Flanke und einer abfallenden Flanke der Spannungspulse zeitverschoben ist, um einen gewünschten Spannungswert einzustellen, wenn ein Laserpuls mit der zweiten Wiederholrate in der Pockelszelle ist.

2. Verfahren gemäß Anspruch 1, wobei die Dauer der Laserpulse mit der zweiten Wiederholrate in dem Bereich von 3 fs bis 1000 ps liegt.

3. Vorrichtung zur Erzeugung von Bursts von Laserpulsen, aufweisend:
- ein Pulslasersystem (1.1, 1.3), das Laserpulse mit einer ersten Wiederholrate erzeugt,
- einen Burstgenerator, der die Laserpulse mit der ersten Wiederholrate empfängt und Laserbursts mit der ersten Wiederholrate erzeugt, wobei die Laserbursts mit der ersten Wiederholrate jeweils eine Folge von Laserpulsen mit einer zweiten Wiederholrate enthalten, wobei die zweite Wiederholrate größer ist, als die erste Wiederholrate, wobei der Burstgenerator eine Pockelszelle (5) und eine Kontrollschaltung (5, 6) für die Pockelszelle aufweist, welche konfiguriert ist, individuell eines oder mehrere von dem Auftreten, der Pulsform, Pulsspitzenleistung, und Pulsdauer der Laserpulse mit der zweiten Wiederholrate innerhalb der Laserbursts mit der ersten Wiederholrate durch das Liefern oder Entfernen einer Spannung zu oder von der Pockelszelle (5) zu kontrollieren, wobei die Kontrollschaltung (5, 6) für die Pockelszelle eine Zeitverschiebungseinheit (6.3) aufweist, welche konfiguriert ist, die Zeit für das Liefern oder Entfernen der Spannung zu verschieben.

4. Vorrichtung gemäß Anspruch 3, wobei der Burstgenerator ein optisches Resonatorsystem (20) aufweist, wobei die Pockelszelle (5) innerhalb des optischen Resonatorsystems (20) angeordnet ist.

5. Vorrichtung gemäß Anspruch 4, wobei die Pockelszelle (5) derart steuerbar ist, dass in jedem Umlauf oder in jedem n-ten Umlauf (n=1, 2, ...) eines Laserpulses mit der zweiten Wiederholrate, welcher in dem Resonatorsystem (20) zirkuliert, ein gewünschter Teil des Laserpulses mit der zweiten Wiederholrate aus dem Resonatorsystem (20) ausgekoppelt wird.

## Revendications

1. Procédé destiné à générer des salves d'impulsions laser, comprenant les étapes consistant à :
- générer des impulsions laser à une première fréquence de répétition ;
- générer des salves laser à une première fréquence de répétition à partir des impulsions laser à une première fréquence de répétition, les salves laser à une première fréquence de répétition contenant chacune une séquence d'impulsions laser à une seconde fréquence de répétition ;
dans lequel la seconde fréquence de répétition est supérieure à la première fréquence de répétition ;
dans lequel les salves laser à la première fréquence de répétition sont générées dans un générateur de salves en faisant appel à une cellule de Pockels ; et
- commander de manière individuelle une ou plusieurs de l'occurrence, de la forme des impulsions, de la puissance crête des impulsions et de la durée des impulsions des impulsions laser à la seconde fréquence de répétition à l'intérieur des impulsions laser à la première fréquence de répétition, en fournissant des impulsions de tension à la cellule de Pockels en synchronisme avec les impulsions laser à la seconde fréquence de répétition entrantes, et l'un d'un front montant et d'un front descendant, voire les deux, des impulsions de tension sont décalés dans le temps de façon à régler une valeur de tension souhaitée quand une impulsion laser à la seconde fréquence de répétition se situe dans la cellule de Pockels.

2. Procédé selon la revendication 1, dans lequel :
la durée des impulsions laser à la seconde fréquence de répétition se situe dans une plage comprise entre 3 fs et 1 000 ps.

3. Appareil destiné à générer des salves d'impulsions laser, comprenant:
- un système laser à impulsions (1.1, 1.3) qui génère des impulsions laser à une première fréquence de répétition ;
- un générateur de salves qui reçoit les impulsions laser à la première fréquence de répétition et qui génère des salves laser à une première fréquence de répétition, les salves laser à une première fréquence de répétition contenant chacune une séquence d'impulsions laser à une seconde fréquence de répétition, dans lequel :
la seconde fréquence de répétition est supérieure à la première fréquence de répétition, dans lequel :
le générateur de salves comprend une cellule de Pockels (5) et un circuit de commande de cellule de Pockels (5, 6) configuré de façon à commander de manière individuelle une ou plusieurs de l'occurrence, de la forme des impulsions, de la puissance crête des impulsions et de la durée des impulsions des impulsions laser à la seconde fréquence de répétition à l'intérieur des salves laser à la première fréquence de répétition, en fournissant ou en retirant une tension, à ou de, la cellule de Pockels (5), le circuit de commande de cellule de Pockels (5, 6) comprenant une unité de décalage dans le temps (6.3) configurée de façon à décaler l'instant de la fourniture ou du retrait de la tension.

4. Appareil selon la revendication 3, dans lequel :
le générateur de salves comprend un système de résonateur optique (20), la cellule de Pockels (5) étant agencée à l'intérieur du système de résonateur optique (20).

5. Appareil selon la revendication 4, dans lequel :
la cellule de Pockels (5) peut être commandée de telle sorte que dans chaque aller-retour ou dans chaque nième aller-retour (n = 1, 2, ...) d'une impulsion laser à une seconde fréquence de répétition qui circule dans le système de résonateur (20), une partie souhaitée de l'impulsion laser à la seconde fréquence de répétition soit couplée hors du système de résonateur (20).
